# EUROPEAN PATENT APPLICATION

(11) **EP 2 019 530 A1**
(43) Date of publication of application: **28.01.2009**
(21) Application number: 07252939.9
(22) Date of filing: 25.07.2007
(51) Int. Cl.: H04L 29/06, H04L 12/66

(54) **Message delivery**

(71) Applicant: British Telecommunications Public Limited Company, London EC1A 7AJ (GB)
(72) Inventor: The designation of the inventor has not yet been filed
(74) Representative: Williamson, Simeon Paul

(57) **Abstract**

A gateway apparatus for enabling communication between an object running within a virtual environment hosted by a virtual environment server and a messaging client. A user can send control messages from a messaging client to objects running within the virtual environment on the virtual environment server. A user within the virtual environment can send messages to other users of a messaging client. The gateway apparatus performs message conversion between the various protocols used by the messaging client and the virtual environment.

## Description

### Technical Field

The present invention relates to message passing and in particular to a method and apparatus for enabling communication between an object located within a virtual environment and a messaging client.

### Background to the Invention

It is known in the art to use computers to create computer based representations of simple objects such as cubes and spheres as well complex composite objects such as vehicles and buildings. In addition to modelling the physical appearance (dimensions, colour) of such objects, other physical properties can also be modelled such as strength, flexibility, conductivity etc. In order to increase the "realism" of the computer generated representations, real world constraints such as gravity and time can also be modelled. By modelling such objects and their interactions with other objects, the behaviour of the object in a given situation can be simulated. For example the behaviour of a car at high speeds or the effect of water level increases on a given landscape etc.

It is also known in the art to create computer based simulated environments which are primarily designed to allow users to interact with other users via avatars. Such computer based simulated environments will be referred to as "virtual environments" or "virtual worlds". These virtual environments may be two-dimensional worlds or three-dimensional worlds depending on the level of realism desired.

Virtual environments are typically implemented as a simulator process executing on a server or servers hosted by the virtual environment developers. To interact with the virtual environment, a user must log into the virtual environment using a dedicated client program. During a registration process the user can design their avatar and provide log in information to uniquely identify that user. Once logged into the virtual environment, the user can interact with other users within the virtual environment, e.g. hold conversations with individuals or participate in discussion groups, create personal virtual objects etc, and in the case of gaming virtual environments participate in quests to gain items and experience to improve their avatar's equipment and statistics. The user's avatar and created objects are stored at the server and therefore virtual environments are said to be persistent. The virtual environment and the objects within the environment persist even when the user is not logged into the virtual environment. Similarly, most virtual environments model the concept of time and the virtual game timeline continues even if no users are logged into the virtual environment.

Second Life ® is an example of a virtual environment. This virtual environment was developed and is maintained by Linden Labs ® and is advertised as "3D virtual world". Second Life ® and Linden Research ® are registered trade marks of Linden Research, Inc.

In Second Life, the virtual world is called the Grid and is simulated on a large array of servers. The Grid is divided into regions and each region is simulated by a single server instance. All user information is stored at the server side such as the avatar properties and user objects which may continue to execute even when the user is not logged into Second Life.

Second Life provides users with a modelling tool within the environment. Users can therefore 'build' objects such as buildings, landscapes, vehicles, furniture and machines within the Second Life environment. Second Life also provides a scripting language called Linden Scripting Language to allow users to define the behaviour of their modelled objects. For example the user can add a script to cause a door to 'open' when the user issues an open command via their avatar, or to change colour if the user issues a 'paint' command.

Currently Second Life only supports text-based communication. To simulate talking, a user's typed message is broadcast any users within a certain radius of the user will receive the message. Second Life also supports private chat or instant messaging. The user must enter the avatar name of a specific user along with their message and Second Life sends that message to the named avatar.

As described above, Second Life allows a user to interact with other Second Life users and to interact with objects either designed by that user or other users. However interaction is limited to entities within the Second Life virtual environment. This restriction is not limited to Second Life.

The present invention has been developed with this problem in mind.

In one aspect, the present invention provides an apparatus for enabling communication between an object in a virtual environment and a messaging client, in which the virtual environment passes messages defined according to a first protocol, and the messaging client passes messages defined according to a second protocol, the apparatus comprising: messaging means for: 1) receiving messages from a messaging server coupled to the messaging client, said messages having a destination address, a message body, and being defined in accordance with said second protocol, and 2) sending messages to said messaging server, said messages having a destination address, a message body and being defined in accordance with said second protocol; virtual environment messaging means for: 1) receiving messages from a virtual environment server associated with the object, said messages having an object identifier, a message body and being defined in accordance with said first protocol and 2) sending messages to said virtual environment server, said messages having an object identifier, a message body and being defined in accordance with said first protocol; and message processing means for converting messages between said first and second protocols.

In a second aspect, the present invention provides a method of enabling communication between an object in a virtual environment and a messaging client, in which the virtual environment passes messages defined according to a first protocol, and the messaging client passes messages defined according to a second protocol, the method comprising the steps of: receiving messages from a messaging server coupled to the messaging client, said messages having a destination address, a message body, and being defined in accordance with said second protocol; converting messages from said second protocol into said first protocol; and sending messages to said virtual environment server, said messages having an object identifier, a message body and being defined in accordance with said first protocol or receiving messages from a virtual environment server associated with the object, said messages having an object identifier, a message body and being defined in accordance with said first protocol; converting a message from said first protocol into said second protocol; and sending messages to said messaging server, said messages having a destination address, a message body and being defined in accordance with said second protocol.

Embodiments of the present invention will now be described in detail with reference to the accompanying drawings in which:
Figure 1 schematically shows the system architecture in a first embodiment;
Figure 2 Figure 2 schematically shows a more detailed view of the system according to the first embodiment;
Figure 3 schematically shows the functional components of the gateway illustrated in Figures 1 and 2;
Figure 4 schematically shows the contents of a data store illustrated in Figure 3;
Figure 5 is a flowchart showing the processing of the gateway illustrated in Figure 3 in response to a message;
Figure 6A schematically shows the format of a message sent from a BT Instant Messenger client to the gateway;
Figure 6B schematically shows the format of a message sent from the gateway to the Second Life server;
Figure 6C schematically shows the format of a response message send from the Second Life server to the gateway;
Figure 7 is a flowchart showing the processing of the gateway 5 for a response message received from the Second Life server;
Figure 8 shows the flow of messages between the BT Instant Messenger Client (via the BT Instant Messenger Server 7), the gateway 5 and the Second Life Server;
Figure 9 schematically shows the functional components of a gateway in accordance with the second embodiment.
Figure 10 schematically shows the functional components of a gateway supporting a scripting engine in accordance with a third embodiment;
Figure 11 shows the contents of a table in a scripting engine shown in Figure 10;
Figure 12A shows the content of a message sent from the BT Instant Messaging client;
Figure 12B shows the content of a generated XML-RPC message sent to the Second Life Server;
Figure 13 schematically shows the functional components of a gateway supporting a parsing engine in a fourth embodiment;
Figure 14 shows the contents of a datastore in the fifth embodiment;
Figure 15 shows the contents of a contacts list in the fifth embodiment;
Figure 16 shows the flow of messages between the BT Instant Messenger Client, the gateway and the Second Life server in the fifth embodiment; and
Figure 17 schematically shows the functional components of a gateway supporting multiple external messaging systems.

### Specific description

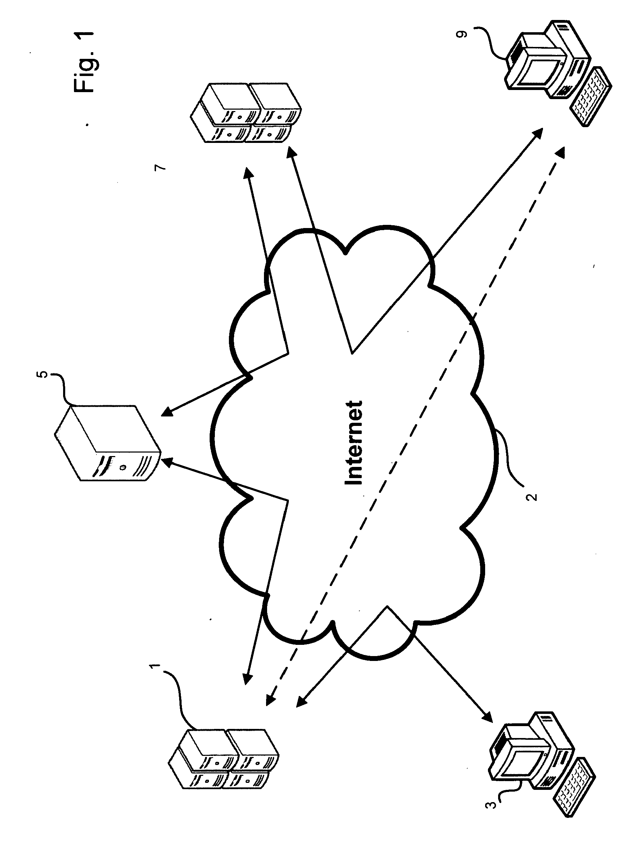

Figure 1 schematically shows the system architecture in a first embodiment. A virtual environment server 1 hosts the virtual environment within a simulator process and stores information relating to each virtual environment user, and any objects created by the user within the virtual environment. The virtual environment may be distributed across an array of servers but for ease of explanation will be referred to simply as virtual environment server 1. As is conventional, a user can communicate with the virtual environment server 1 using a virtual environment client 3. The virtual environment server 1 and the virtual environment client 3 communicate via a computing network 4 such as the Internet. The virtual environment client 3 allows the user to create new objects, modify objects by adding new scripts to control object behaviour, interact with their own objects and interact with other virtual environment users and their created objects. To interact with objects, a user must select the object using their avatar in order to view a set of object commands associated with the object. The user selects an object command and the object property is changed accordingly.

A system according to the first embodiment allows objects to be controlled and modified without using the virtual environment client. As shown in Figure 1, the system according to the first embodiment also includes a gateway server 5 linking the virtual environment server 1 to a messaging server 7 via a network 2 such as the Internet. The Messaging Server 7 is connected to one or more messaging clients 9 and permits message transfer between messaging clients 9. For simplicity, only a single messaging client is shown.

The first embodiment will now be described in more detail in which the virtual environment server 1 is a Second Life server 1 and the messaging server is a BT Instant Messenger server 7. For ease of explanation, the system will be described in which a user can communicate with a single Second Life object 11 using a BT Instant Messenger Messaging client 9. In this embodiment, the Second Life object has a UUID of 038baa36-cd8c-80c6-910e-2dc0da4adccb and the user has a BT Instant Messenger username of sl_user@im.bt.com. In addition, the Second Life object has a BT Instant Messenger username of sl_obj1@im.bt.com.

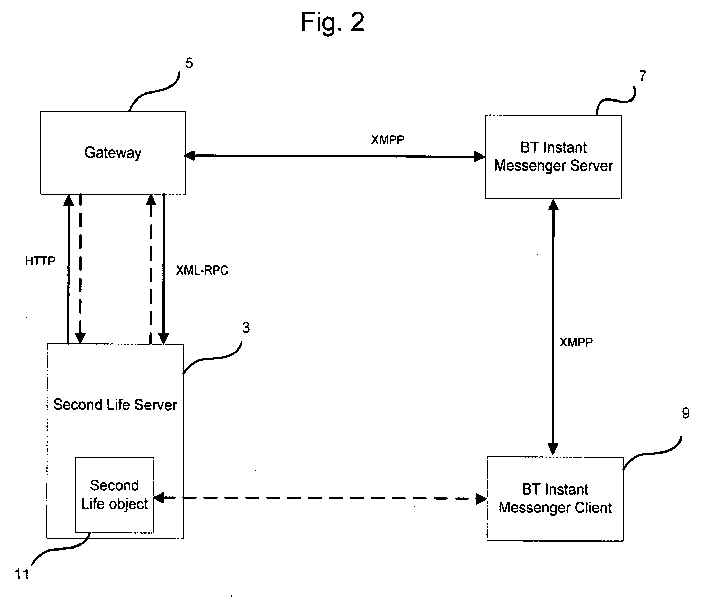

Figure 2 schematically shows a more detailed schematic of the system according to the first embodiment. In particular, a user at BT Instant Messenger client 9 can communicate with an object 11 running within the Second Life environment hosted by Second Life server 1 without using the Second Life client 3. This communication is represented by a dashed line between the BT Instant Messenger client 9 and the Second Life Server 1. In order to effect this communication from BT Instant Messenger to Second Life, the user messages are forwarded from the BT Instant Messenger client 9, to the BT Instant Messenger server 7, to the gateway 5 and finally to the object 11 running on the Second Life server 1. Conversely, for messages to pass from the object 11 to the user at BT Instant Messenger client 9, the messages are forwarded from the Second Life Server 1 to the Gateway 5, to the BT Instant Messenger server 7 and finally to the BT Instant Messenger client 9.

As shown in Figure 2, the BT Instant Messenger client 9 communicates with the BT Instant Messenger server 7 using the XMPP protocol. XMPP is also used for communication between the BT Instant Messenger server 7 and the gateway 5.

However, the Second Life objects can only communicate with entities outside the Second Life virtual environment using the HTTP and XML-RPC protocols. A current limitation of the Linden Scripting Language used to write object scripts is that Second Life objects can send HTTP requests and can receive XML-RPC requests, but cannot receive HTTP requests, nor send XML-RPC requests. However, Second Life objects can receive responses to their HTTP requests. Furthermore, Second Life objects can send XML-RPC replies to XML-RPC requests.

In Figure 2, these limitations are denoted by four guided arrows. A solid arrow from the Second Life server 1 to the gateway 5 represents the Second Life object's HTTP requests whilst the dashed arrow from the gateway 5 to the Second Life server 1 represents the gateway 5 HTTP response. The solid arrow from the gateway 5 to the Second Life server 1 represents a Second Life object's XML-RPC request whilst the dashed arrow from the Second Life server 1 to the gateway 5 represents the Second Life object's XML-RPC response.

The gateway 5 provides a link between the communication protocols used by the Second Life and the communication protocols used by the BT Instant Messenger service. The gateway 5 functions in the same way as a BT Instant Messenger client 9 in order to connect to the BT Instant Messenger server 7. It differs from a typical BT Instant Messenger client 9 in that messages are forwarded to the Second Life server 1 instead of being displayed to a user. Whenever the gateway 5 receives an XMPP message from the BT Instant Messenger server 7, it converts the message into an XML-RPC message and sends this new message to the Second Life server 1. Similarly, when an HTTP message is received from a Second Life object 11, the message contents are forwarded in an XMPP protocol message to the BT Instant Messenger server.

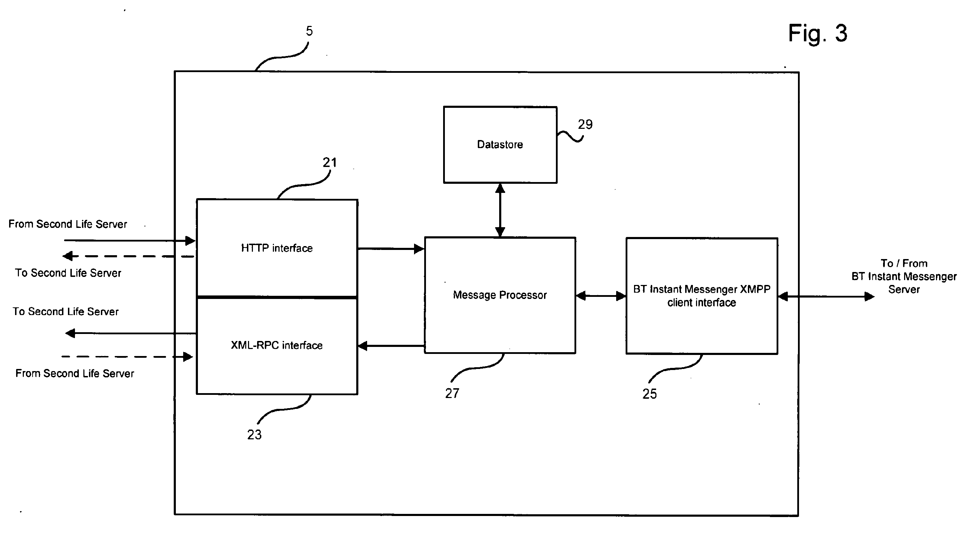

Figure 3 schematically shows the functional components of the gateway 5. For external communications, the gateway 5 includes an HTTP interface 21 for receiving HTTP requests from, and sending HTTP replies to, the Second Life server 1, an XML-RPC interface 23 for sending XML-RPC messages to, and receiving XML-RPC replies from, the Second Life Server 1. In this embodiment, the gateway 5 also includes a BT Instant Messenger XMPP client interface 25 for sending and receiving messages from the BT Instant Messenger server 7. The HTTP interface 21 and the BT Instant Messenger XMPP client interface 25 receive the messages in buffers (not shown), and check that they are valid messages. The XML-RPC interface 25 reads a message from a buffer (not shown) and sends the message to the Second Life server 1. The XML-RPC interface 25 also receives XML-RPC reply messages sent from the Second Life object 11 running on the Second Life server 1.

The HTTP interface 21, XML-RPC interface 23 and BT Instant Messenger XMPP interface 25 are coupled to a message processor 27 which is responsible for processing messages received at the HTTP interface 21 and BT Instant Messenger XMPP interface 25. In particular, the message processor 27 generates XMPP messages using information contained in received HTTP request messages and generates XML-RPC messages using information contained in received XMPP messages.

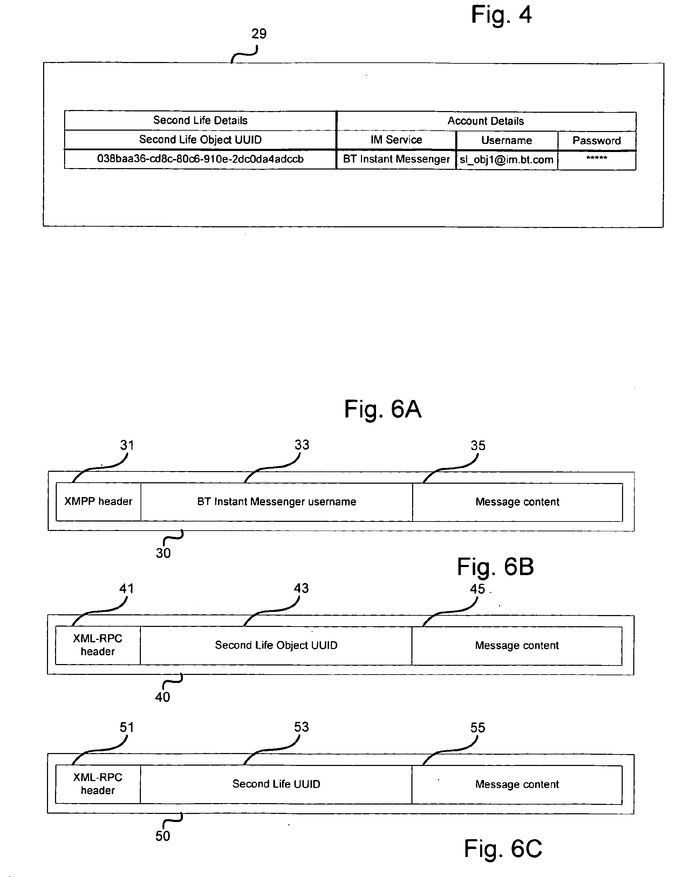

The gateway 5 also includes a datastore 29 for storing information used by the message processor 27 to generate messages. The contents of the datastore 29 according to the first embodiment are shown in Figure 4. The datastore 29 stores the UUID of the Second Life object 11 and also the BT Instant Messenger login information (username and password) of the user.

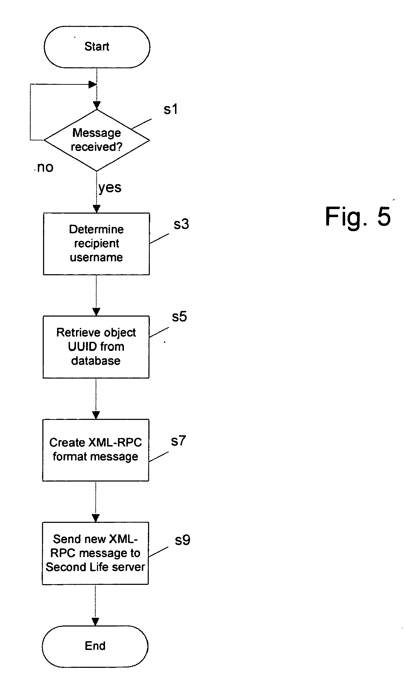

In the first embodiment, the system described above can be used by a user to interact with their Second Life objects without using the Second Life client 3. However, the interaction must be initiated from the BT Instant Messenger client. Figure 5 is a flowchart showing the processing of the gateway 5 for messages sent from a user via their BT Instant Messenger account sl user@im.bt.com on BT Instant Messenger client 9 to the Second Life object having a BT Instant Messenger username of sl_obj1@im.bt.com and a UUID of 038baa36-cd8c-80c6-910e-2dc0da4adccb.

At step s1, the BT Instant Messenger XMPP client interface 25 checks whether an XMPP message 30 has been received. If a message 30 has been received, then processing proceeds to step s3. Otherwise the BT Instant Messenger XMPP client interface 25 continues to check for messages 30 at step s1.

Figure 6A shows the format of the message 30 sent from the BT Instant Messenger client 9. The message 30 has an XMPP header 31 field, a BT Instant Messenger recipient username field 33 and a message body 35. At step s3, the message processor 27 extracts the BT Instant Messenger username from the BT Instant Messenger recipient username field 33 and at step s5 uses the retrieved Instant Messenger username to index into the data store 29 in order to determine the UUID of the Second Life object 11 associated with the received BT Instant Messenger username.
At step s7, the message processor 27 generates an XML-RPC message 40 using the determined UUID and the text contained in the message body 35 of the received BT Instant Messenger XMPP message 30. The format of the generated message 40 is shown in Figure 6B. The XML-RPC message 40 has an XML-RPC header 41, a Second Life object UUID field 43 and a message body 45.

At step s9, the XML-RPC interface 23 sends the generated message 40 to the Second Life server 1.

Once the message 40 generated by the message processor 27 is received by the Second Life server 1 and passed to the Second Life object 11, the object 11 may carry out some processing and send a response message 50 back to the BT Instant Messenger client 9.

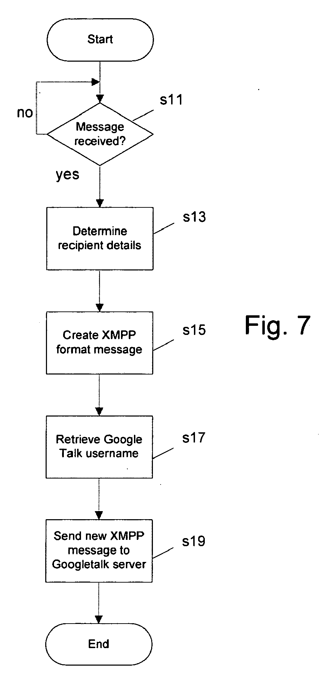

Figure 7 is a flowchart showing the processing of the gateway 5 for reply messages 50 sent from a Second Life object to a user of BT Instant Messenger client. As described earlier, the Linden Scripting Language does not currently allow Second Life objects to send XML-RPC request messages, but replying to a XML-RPC message is supported. Therefore at step s11, the XML-RPC interface 23 checks whether a new message 40 has been received. If a message 40 has been received, then processing proceeds to step s13. Otherwise the XML-RPC interface 23 continues to check for new messages 40 at step s1.

The reply message 50 sent from the Second Life Server 1 has three parts, an XML-RPC header 51, a Second Life object UUID field 53 and a message body 55 as shown in Figure 6C. Therefore at step s13, the message processor 27 extracts the UUID from the object UUID field 53 and at step s15 indexes into the data store 29 in order to determine the corresponding BT Instant Messenger user name.

At step s17, the message processor 27 generates a XMPP message using the determined BT Instant Messenger username and the message body text of the received XML-RPC reply message. The format of the generated message is the same as that shown in Figure 6A.

At step s19, the BT Instant Messenger XMPP client interface 25 sends the generated message to the BT Instant Messenger Server 7 which subsequently forwards the message to the BT Instant Messenger client 9.

### Registration with gateway

As shown above, the message processor 27 of the gateway 5 relies on a mapping between the Second Life object 11 UUID and BT Instant Messenger username associated with the Second Life object 11 in order to pass messages from the Second Life Server 1 to the BT Instant Messenger Server 7 and vice versa. In order to populate the data store 29, in the first embodiment, when the Second Life object 11 is first instantiated it creates an XML-RPC channel so that it can receive messages from the gateway 5 and then sends an HTTP request to the gateway 5, the message contains the Second Life object's UUID, BT Instant Messenger username and password. The HTTP interface 21 receives the HTTP request and notifies the message processor 27 which extracts the included information and creates an entry within the data store 29. The message processor 27 then generates an HTTP reply to the Second Life server 1 indicating that the registration was successful.

After successful registration, at a later time the Second Life object 11 will send another HTTP message to the gateway, providing its UUID. The request takes the form:
http://my.gateway.com/slim-control/?setSLobjectKey=038baa36-cd8c-80c6-910e-2dc0da4adccb

When the gateway 5 receives this HTTP request on the HTTP interface 21, the message processor 27 retrieves the BT Instant Messenger username and password stored in the data store 29 and instructs the BT Instant Messenger XMPP client interface 25 to connect to the BT Instant Messenger Server 7 using the retrieved BT Instant Messenger login information.

A complete example of the operation of the system according to the first embodiment will now be described.

The Second Life object 11 having a UUID of 038baa36-cd8c-80c6-910e-2dc0da4adccb is a cube which can be either red, green or blue. The user having username sl_user@im.bt.com can send messages 30 from a BT Instant Messenger client 9 containing the word "red", "green" or "blue" in the message body 35. In response the object 11 will change to the appropriate colour. Additionally the current colour of the object 11 can be queried by sending a message 30 containing the word "state" in the message body 35.

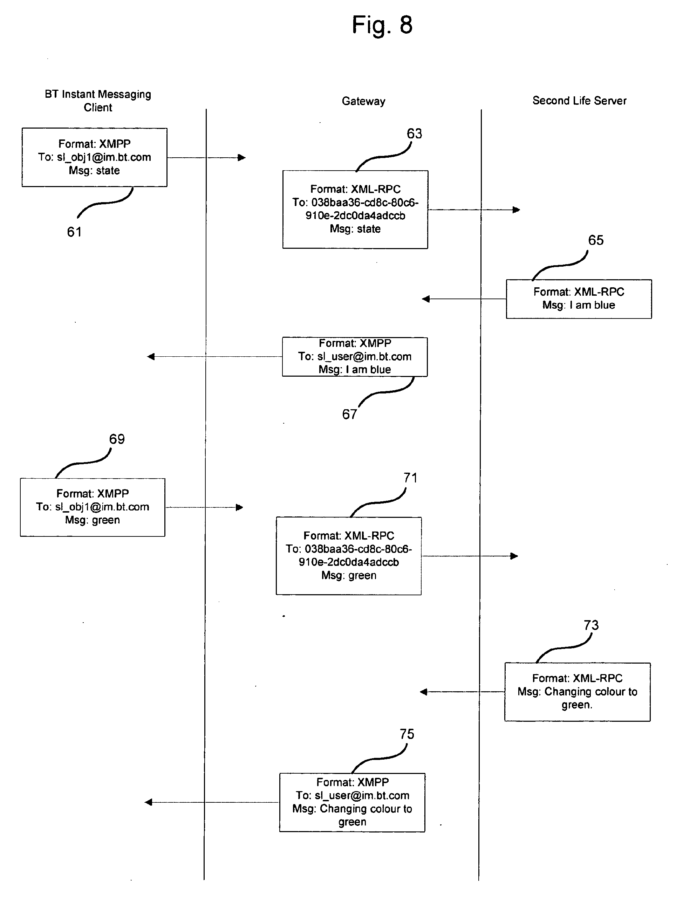

Figure 8 shows the flow of messages between the BT Instant Messenger Client 9 (via the BT Instant Messenger Server 7), the gateway 5 and the Second Life Server 1 when the user first consults the state of the cube which is blue, and then changes the colour of the cube to green.

After the user has typed the word "state" into the conversation window of the BT Instant Messenger client 9 and pressed the send button, the BT Instant Messenger client builds an XMPP message 61 addressed to the BT Instant Messenger username sl obj1@im.bt.com which is the username registered with the Second Life cube object 11.

The message 61 is routed by the BT Instant Messenger Server 7 to the gateway 5. The gateway 5 consults the data store 29 and generates a new XML-RPC message 63 containing the UUID of the cube object in the Second Life Object UUID field and "state" in the message body. The XML-RPC interface 23 sends the message 63 to the Second Life Server 1.

The format of the XML-RPC message 63 sent from the Gateway 5 to the Second Life server 1 is shown below:

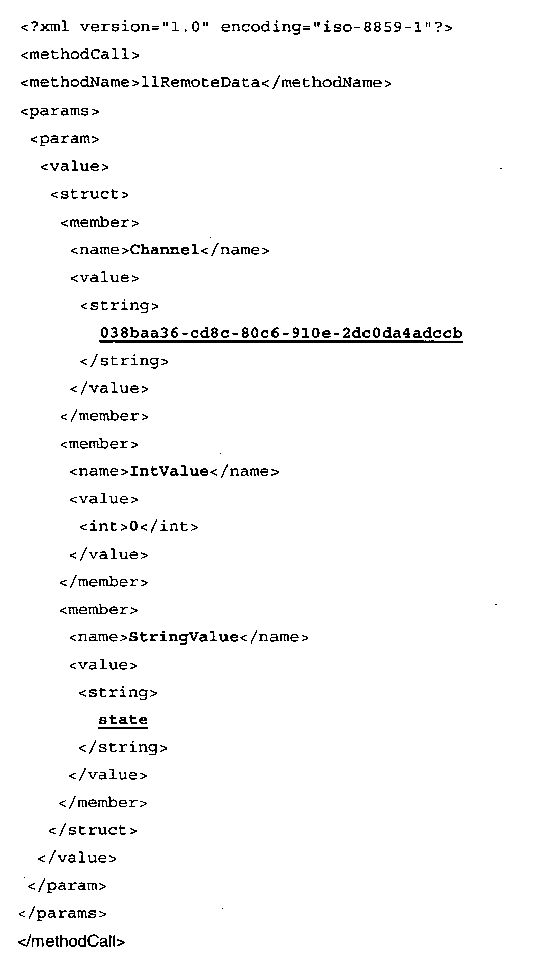

Once the XML-RPC message 63 is received at the Second Life server 1 and forwarded to the cube object 11, the object 11 generates a XML-RPC reply message 65 containing the message body "I am blue" and the Second Life Server 1 sends the reply message 65 to the gateway 5.

```
 <?xml version="1.0"?>
 <methodResponse> <params>
  <param>
   <value>
    <struct>
     <member>
      <name>Channel</name>
      <value>
       <string>
          038baa36-cd8c-80c6-910e-2dc0da4adccb
       </string>
      </value>
     </member>
     <member>
      <name>StringValue</name>
      <value>
       <string>
         I am blue
       </string>
      </value>
     </member>
     <member>
      <name>IntValue</name>
      <value>
       <int>0</int>
      </value>
     </member>
    </struct>
   </value>
  </param>
 </params>
 </methodResponse>
```

The gateway 5 receives the XML-RPC message 65 via the XML-RPC interface 23 and generates a new BT Instant Messenger XMPP message 67 having the user's BT Instant Messenger username in the BT Instant Messenger username field and "I am blue" in the message body. The generated message 67 is sent to the user via the BT Instant Messenger XMPP interface 25 to the BT Instant Messenger Server 7 and the BT Instant Messenger Client 9.

The user can choose to make the cube green, by typing the word "green" into the conversation window of the BT Instant Messenger client 9 and pressing the send button, the BT Instant Messenger client builds an XMPP message 69 addressed to the BT Instant Messenger username sl_obj1@im.bt.com which is the username registered with the Second Life cube object 11.

The message 69 is routed by the BT Instant Messenger Server 7 to the gateway 5. The gateway 5 consults the data store 29 and generates a new XML-RPC message 71 containing the UUID of the cube object in the Second Life UUID field and "green" in the message body. The XML-RPC interface 23 sends the message to the Second Life Server 1.

Once the XML-RPC message 71 is received at the Second Life server 1 and the cube object, the script generates a XML-RPC reply message 73 containing the message body "Changing colour to green" and the Second Life Server 1 sends the reply message 73 to the gateway 5.

The gateway receives the XML-RPC message 73 via the XML-RPC interface 23 and generates a new BT Instant Messenger XMPP message 75 having the user's BT Instant Messenger username in the to field and "Changing colour to green" in the message body. The generated message 75 is sent to the user via the BT Instant Messenger XMPP interface 25 to the BT Instant Messenger Server and the BT Instant Messenger Client.

The method of the cube may be implemented as follows:

```
 remote_data(integer type, key channel, key message_id, string sender, integer ival, string
 sval)
 {
  if (type == REMOTE_DATA_CHANNEL)
  {
    // Our XML-RPC channel has been set up, tell the gateway what our UUID is
    11HTTPRequest("http://my.gateway.com/slim-control/?setSLobjectKey="+(string) channel,
 [HTTP_METHOD,"GET"], "");
  }
 else if (type == REMOTE_DATA_REQUEST)
  {
    // We have received an XML-RPC request
    string response;
    if (sval == "red")
    {
     11SetColor(<1,0,0>, ALL_SIDES);
     currentColour = "red";
     response = "Changing colour to red.";
    }
    else if (sval == "green")
     11SetColor (<0,1,0>, ALL_SIDES);
     currentColour = "green"
     response = "Changing colour to green.";
    }
    else if (sval == "blue")
    {
      11SetColor (<0,0,1>, ALL_SIDES) ;
      currentColour = "blue";
      response = "Changing colour to blue.";
    }
    else if (sval == "state")
    {
      response = "I am " + currentColour;
    }
    else
    {
      response = "Unknown command. Valid commands are \"red\", \"green\", \"blue\", and
 \"state\".";
    }
  11RemoteDataReply (channel, message_id, response, 0);
 }
```

The first embodiment describes a system for allowing communication between a virtual world environment such as Second Life and a messaging system such as BT Instant Messenger. In particular, the first embodiment describes a gateway 5 which can interface between the Second Life protocols and the protocols used by BT Instant Messenger in order to route messages sent from one protocol to the other. The first embodiment also describes scripts which can respond to XML-RPC messages sent from the gateway containing a message body obtained from a BT Instant Messenger message in order to change an object property and send a reply message back to the BT Instant Messenger user.

The advantage of such a system is that a user can interact with their Second Life objects without using the standard Second Life Client 3 which is far more computationally intensive than a messaging client such as BT Instant Messenger.

### Second embodiment

In the first embodiment, messages sent between the Second Life server 1 and the gateway 5 are not encrypted. Therefore it may be possible for an attacker to spoof the identity of either the Second Life object or the gateway and thereby allow unauthorised control of objects by the attacker.

In the second embodiment, the user has a number of Second Life objects 11 which can be controlled by using the BT Instant Messenger client. In addition, authentication and security are added to the basic operation of the system described in the first embodiment. The Linden Scripting Language currently provides a function string IIMD5String(string src, integer nonce) which performs an MD5 Message Digest Algorithm on a string src with a nonce and returns a 32-character hex string. In order to authenticate the Second Life object 11 with the gateway 5 and vice versa, one solution would be to utilise a common nonce shared between both the Second Life object 11 and the gateway 5.

Messages sent from the Second Life object 11 would similar to those in the first embodiment shown in Figure 6B, but would include an extra field containing the hash value of the other fields. When the Second Life object 11 receives a message, the object 11 would calculate a hash value from the field data and compare it to the received hash value. If the calculated hash value matches the received hash value, then the object can be assured that the received message originated from the gateway and has not been altered between transmission and receipt of the message.

Similarly, when the Second Life object 11 sends an HTTP request to the gateway 5, the request would include an extra parameter which is an MD5 hash of the other parameters. For example:
http://proxy.script.php?msg=hi+there&mobile=4412345&hash =ac735eaff6....

Having received such a request, the gateway 5 would calculate the hash value of the parameters using its nonce value which is the same as the nonce given to the authorised object, and compare the result of the hash value received from the Second Life object 11. If the two values match, then the gateway can assume that the Second Life object 11 is allowed to communicate with the gateway 5.

The above scheme allows the Second Life object 11 to authenticate the identity of the gateway 5 and similarly the gateway 5 can authenticate the identity of the Second Life object 11. The problem with the above scheme is that if the nonce value is compromised at either the Second Life object 11 or the gateway 5, then all the Second Life objects 11 and the gateway 5 must be programmed with a new nonce.

In the second embodiment, object specific session keys are used instead on a common nonce. In this way, each Second Life object 11 has an individual key that it can be mapped to a specific Second Life user and each key persists only as long as the session. When a new session is initiated, a new key is allocated. This improves the security of the system and prevents a single compromised key affecting the entire communication chain.

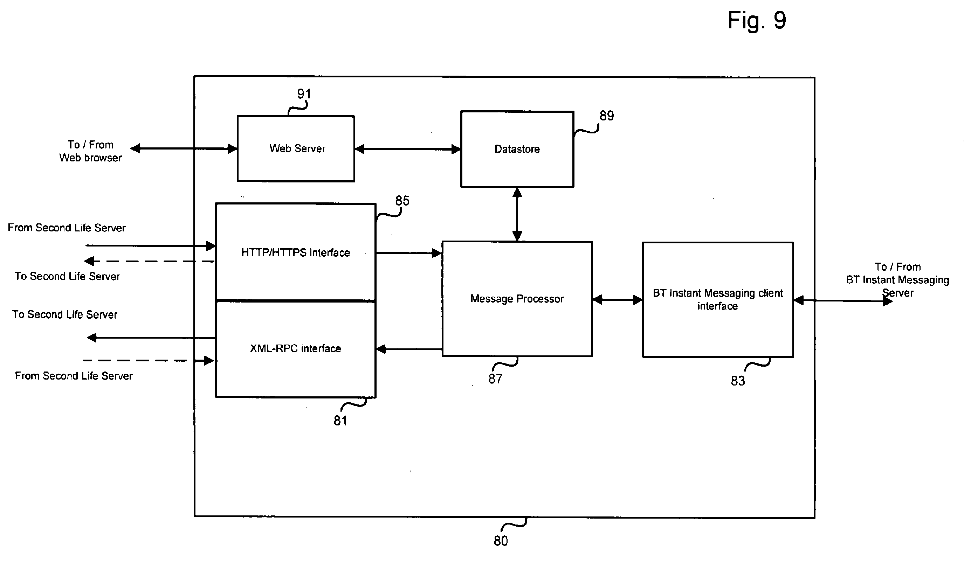

Figure 9 shows a gateway 80 in accordance with the second embodiment. The XML-RPC interface 81 and the BT Instant Messenger XMPP client interface 83 are functionally identical to the XML-RPC interface 23 and the BT Instant Messenger XMPP client interface 25 respectively from the first embodiment. The gateway includes a HTTP/HTTPS interface 85, a message processor 87, a data store 89 and a web server 91.

In order to implement the above mentioned object specific session keys, the user must first use a standard internet browser (not shown) to register their details, including their avatar name, with the gateway 80. The web server 91 processes the user's entered details to generate a unique username and password which is returned to the user. The generated username and password is also stored in the data store 89 along with user's avatar name.

Once registered with the gateway 80, the user can obtain object specific keys for their objects. Within the Second Life environment, when the Second Life object is initiated it creates an XML-RPC channel and sends an HTTP request to the HTTP/HTTPS interface 85 containing the Second Life object's UUID and the user's avatar name in the URL.

The message processor 87 analyses the HTTP request and looks within the data store for an entry matching the received user avatar name. If a match is found, the message processor 87 generates an HTTP response message requesting the user to log into the gateway via the webpage provided by web server 91. If the user correctly enters the username and password matching the stored username and password into the web server 91, the user is asked to confirm that the Second Life object belongs to the user and is trusted. Once confirmation is received, the message processor updates the data store 89 to include an entry for a link between the user's registration information, avatar name and Second Life object UUID. The message processor 89 then generates a random session key and passes this generated key to the Second Life object 11 via the XML-RPC interface in an XML-RPC message addressed to the Second Life object's UUID.

Thereafter, to communicate with the gateway 80, the Second Life object 11 sends messages including the received session key. Similarly, XML-RPC messages from the gateway 80 to the Second Life object 11 include the session key.

In order to improve the security of the system, in the second embodiment, messages from the Second Life objects 11 to the gateway 80 are sent to the HTTPS interface provided on the gateway 80 and data is sent using the "POST" method instead of the GET method. Data is therefore fully encrypted between the Second Life object and the gateway 80.

However, due to a current limitation in the Second Life implementation, XML-RPC requests cannot be sent from the gateway 80 to the Second Life object using encryption. Therefore in the second embodiment, an XML-RPC message is sent from the gateway 80 to the Second Life server 1 in order to notify a Second Life object 11 that an event has occurred. In response to the notification, the Second Life object 11 sends a HTTPS request for information to the HTTP/HTTPS interface 85 to determine the nature of the event.

To further improve security, the user can ensure that only a specific BT Instant Messenger user account can issue commands to their objects. This is achieved by using the privacy settings already available in BT Instant Messenger. In particular, each object's BT Instant Messenger account can be configured to block all contact requests other than from user's own BT Instant Messenger account.

### Third embodiment

In the first and second embodiments, a Second Life user can control the behaviour and properties of their own objects without using the Second Life client. In order to respond to commands issued from the user using a BT Instant Messenger client, each Second Life object requires methods within the script to translate the user's command into an appropriate Second Life Linden Scripting Language command.

In the third embodiment, the scripting associated with each object can be simplified by processing the user command at the gateway. In this embodiment, each user script only requires a BT Instant Messenger account, the ability to listen for XML-RPC messages from the gateway and a simple response script to send a message to the user that the issued command was successful.

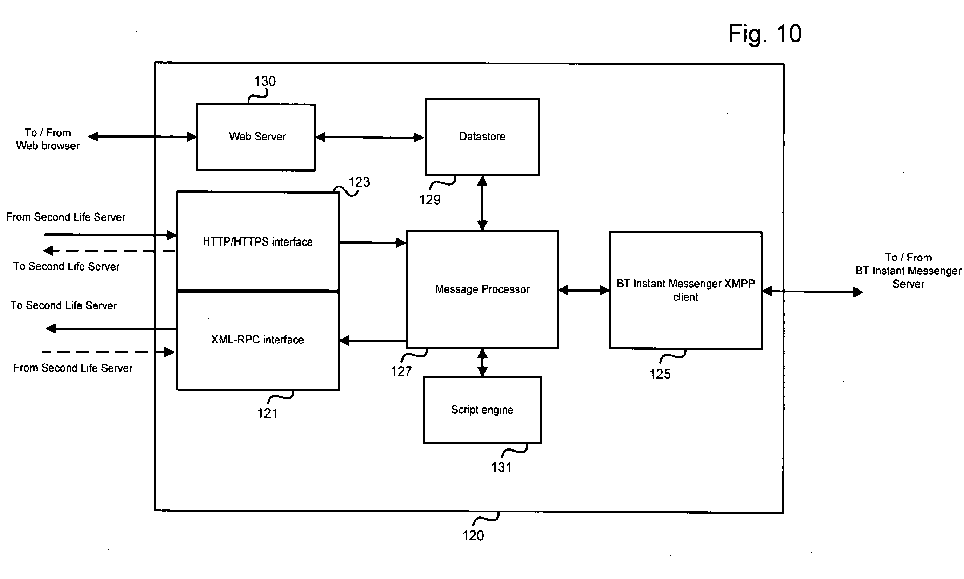

Figure 10 schematically shows the components of a gateway 120 in accordance with the third embodiment. The XML-RPC interface 121, the HTTP/HTTPS interface 123, the BT Instant Messenger XMPP client interface 125, data store 129 and web server 130 correspond to the gateway components of the second embodiment. The gateway 120 includes a script engine 131 coupled to the message processor 127.

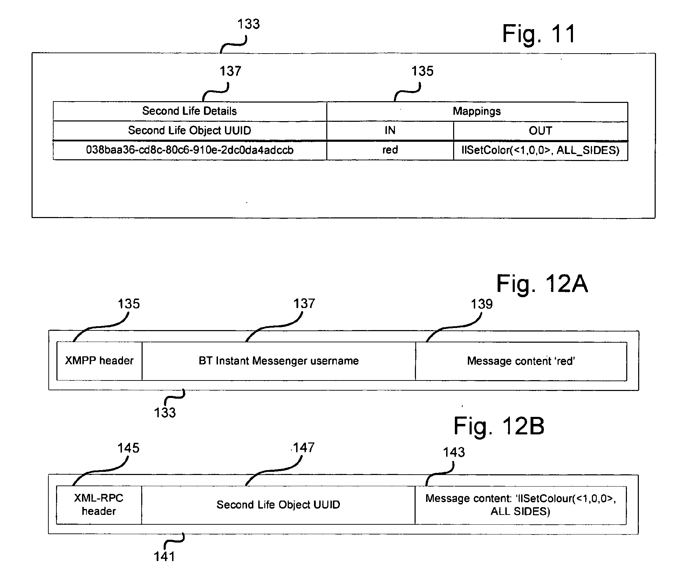

As shown in Figures 12A and 12B, when a message 133 is received from the BT Instant Messenger client interface 125, the message processor 127 removes the XMPP head 135 and uses the BT Instant Messenger username 137 to index into the datastore 129 in order to determine an object UUID. However, instead of copying the message body 139 from the received XMPP message 133 into the generated XML-RPC message 141, the message processor 127 forwards the contents of the message body to the scripting engine 131. The message processor places the output of the scripting engine into field 143 and creates the header 145 and UUID 147.

The scripting engine 131 contains mappings of user keyword commands to Second Life Linden Scripting Language commands and is functionally equivalent to the scripting code associated with the objects of the first and second embodiments. Figure 11 shows the mapping table of the scripting engine. The scripting engine 131 indexes into the mappings 153 using the contents of the received BT Instant Messenger XMPP message body field to locate a corresponding Linden Scripting Language command. For example, using the example of the first embodiment, if the received message body contains the word "red", the scripting engine 131 will determine a mapping from "red" to "llSetColor(<1,0,0>, ALL_SIDES)".

The scripting engine 131 returns the determined Linden Scripting Language command to the message processor 127 for inclusion in the message body 143 of the generated XML-RPC message in place of the contents of the XMPP message 139.

The user can load their mappings into the scripting engine via the web server. In particular, the user can specify mappings which apply to any of their objects or mappings which only apply to specific objects by modifying the scripts associated with each UUID field in the table 133.

### Fourth embodiment

In the first to third embodiments, the Second Life user can send commands to their Second Life objects without using the Second Life client. In response to the reception of a BT Instant Messenger XMPP message, the message body text is examined either by the Second Life object or by a scripting engine within the gateway.

However, if the message text does not exactly match the command keyword, then the object property or behaviour will not be altered and the user will be sent a reply message containing an error message.

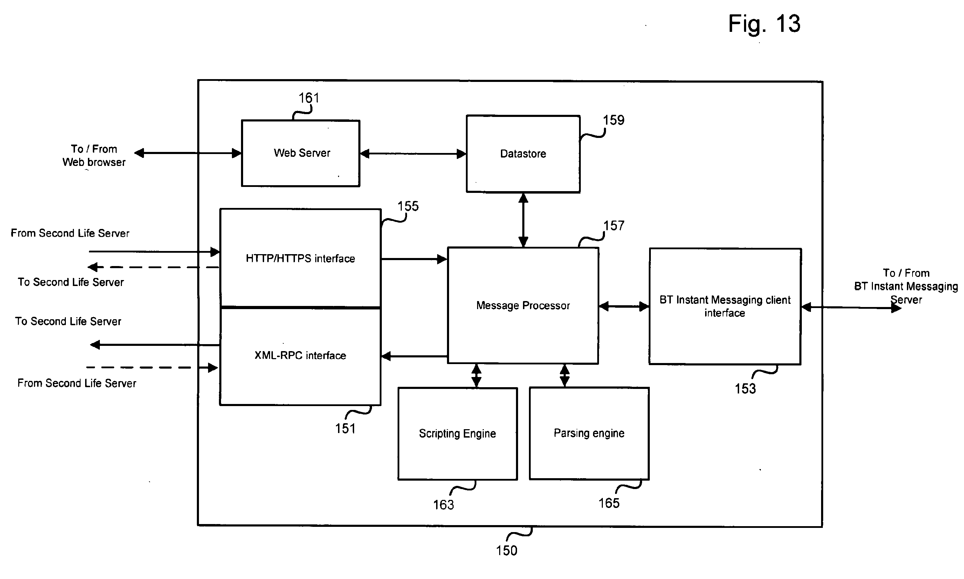

In the fourth embodiment, the user can enter a natural language query from their BT Instant Messaging client window and the BT Instant Messenger client sends an XMPP message containing the natural language query in the message body. The gateway includes a parsing engine to parse the user's message prior to mapping. Figure 13 schematically shows the functional components of the gateway 150 according to the fourth embodiment.

In the fourth embodiment, the XML-RPC interface 151, the HTTP/HTTPS interface 153, the BT Instant Messenger XMPP client interface 155, data store 159 and web server 161 correspond to the gateway components of the second embodiment. The script engine 163 is coupled to the message processor 157 as in the third embodiment. The gateway further includes a parsing engine 165.

The message processor 157 sends the text contained in the message body of a received BT Instant Messenger message to the parsing engine 165. The parsing engine 165 analyses the message text by using at least one of a variety of known parsing techniques such as stemming, verb, noun and adjective detection and word deletion.

Once the message body has been parsed by the parsing engine, the list of resultant words are passed back to the message processor. The message processor 157 will then either send the words to the Second Life object, or forward the words to the scripting engine.

Using the parsing engine allows a user's message to be treated as a plurality of separate Second Life commands. For example, if the user typed "turn red, then green the blue", the parsing engine will determine 'red', 'green' and 'blue' which are all valid object commands. The message processing engine can send three separate XML-RPC messages, the first causing the object to turn red, the second causing the object to turn green and the third causing the object to turn blue.

### Fifth Embodiment

In the first embodiment, the gateway 5 stores registration information which allows a single user to interact with one of their Second Life objects by issuing commands from a BT Instant Messenger client. The commands are packaged in BT Instant Messenger XMPP messages addressed to the object's BT Instant Messenger username. The BT Instant Messenger client sends the messages to a BT Instant Messenger Server which determines the location of the Second Life object's BT Instant Messenger username to be at the gateway 5 which is running a BT Instant Messenger client interface. The received messaged is analysed to determine a mapping from BT Instant Messenger username to Second Life Object UUID and then an XML-RPC message containing the Second Life object's UUID and the original object command is sent to the Second Life server 1.

In the second embodiment, authentication and security are implemented as well as object specific session keys so that a user can interact with more than one of their objects.

In the third and fourth embodiments, the gateway included further processing engines to carry out script conversion and natural language parsing respectively at the gateway.

In a fifth embodiment, the gateway allows users can interact with their objects from a BT Instant Messenger client as described above in the above embodiments and also allows users within the Second Life environment to communicate with other BT Instant Messenger users who are not Second Life users.

In this embodiment, the Second Life user communicates with external users by activating a Head Up Display (HUD) headset object 11 on their avatar. In Second Life this action is visually represented as "wearing" the headset. As with the first and second embodiments, the HUD object 11 is associated with a BT Instant Messenger account. In this embodiment, the HUD object 11 is associated with the user's username of sl_user@im.bt.com. In this embodiment the HUD object's UUID is 550e8400-e29b-41d4-a716-446655440000.

Using this HUD object 11, the Second Life user can initiate conversations with BT Instant Messenger users whose usernames are stored in a contact list associated with the Second Life user. Similarly, when the Second Life user is "wearing" the HUD object 11, a BT Instant Messenger user who has the HUD object's BT Instant Messenger username in their contacts list can initiate conversations with the user, the messages being received by the HUD object 11.

### New account creation

As in the second embodiment, the user first registers the HUD object 11 with the gateway 80 using a web server 91 to obtain a username and password. This username 171 and password 173 is also stored in the datastore 170. In the fifth embodiment, the gateway has the same functional components as the gateway 80 in the second embodiment and will therefore the same reference numerals will be used. However the datastore 170 contains more information as will be described below.

When the HUD object 11 is activated, the HUD object 11 sends a registration request to the gateway 80 via HTTPS. The request contains the name of the user's avatar 175, and the UUID 177 of the HUD object 11. The gateway 80 prompts the user to log into the web server 91 using the previously registered username 171 and password 173 and following a successful login, the gateway 80 registers the UUID of the HUD object 11 and the avatar name of the user with the username and password already stored in the data store 89.

To complete the registration process, the Second Life user enters at the web server 91, login details 179, 181 for their associated BT Instant Messenger account. In this embodiment, the username is sl_user@im.bt.om and the password is *****.

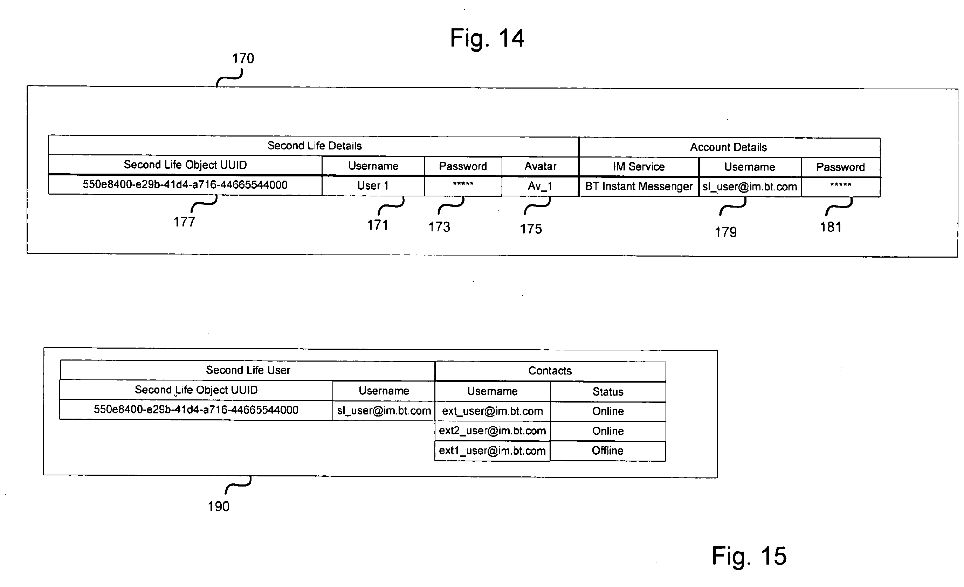

The BT Instant Messenger login information is stored along with the UUID and avatar name in the data store 89 and the gateway 80 logs into the BT Instant Messenger service. The gateway 80 next downloads the contacts list 190 associated with the BT Instant Messenger account. The contacts list is shown in Figure 15.

The gateway 80 generates an XML-RPC message informing the HUD object 11 that a contact list 190 has been downloaded. In response, the HUD object 11 sends an HTTPS message to the gateway 80 requesting the contact list. The gateway 80 sends the retrieved contact list to the HUD object 11 and the HUD object 11 processes the list for display to the user.

After the user has registered the HUD object 11 with the gateway 80, each time the HUD object 11 is activated, the HUD object 11 sends a registration request to the gateway 80 via HTTPS. The request contains the name of the user's avatar, and the UUID of the HUD object 11. The gateway 80 checks the data store 89 and determines that registration information is already available. The gateway 80 therefore proceeds to log into the BT Instant Messenger service using the stored BT Instant Messenger username and password. Once logged in, the contacts list 190 is downloaded, and forwarded in an XML-RPC message to the HUD object 11.

Once the HUD object 11 is active, the gateway 80 will receive notifications directed to the HUD object's BT Instant Messenger account, for example whenever a user on the BT Instant Messenger contacts list signs into or out of the BT Instant Messenger service. When a notification is received in the form of a BT Instant Messenger XMPP message, as described in the first embodiment, the message processor 87 determines the message recipient to perform a reference into the data store 89 in order to find a corresponding object UUID, in this embodiment the UUID of the HUD object 11 is 550e8400-e29b-41d4-a716-446655440000. The message processor 87 then generates an XML-RPC message informing the HUD object 11 that an event has taken place. As in the second embodiment, in response to such an XML-RPC notification, the HUD object 11 sends an HTTPS request for information to the gateway 80. The gateway 80 responds by returning the notification event to the HUD object 11 over HTTPS.

At present, the Second Life scripting language does not support closing notifications. Therefore the gateway 80 is not informed when the user removes the HUD object 11 from their avatar or when they log off. In order for the gateway 80 to notify the IM server that the object has logged off, the gateway 80 periodically sends a message to the HUD object 11. If the HUD object 11 responds with an acknowledgement, the gateway 80 determines that the HUD object 11 is still active. If no response is received, or an error message is received from the Second Life server 1, the gateway 80 deduces that the HUD object 11 has been deactivated and disconnects from the BT Instant Messenger service.

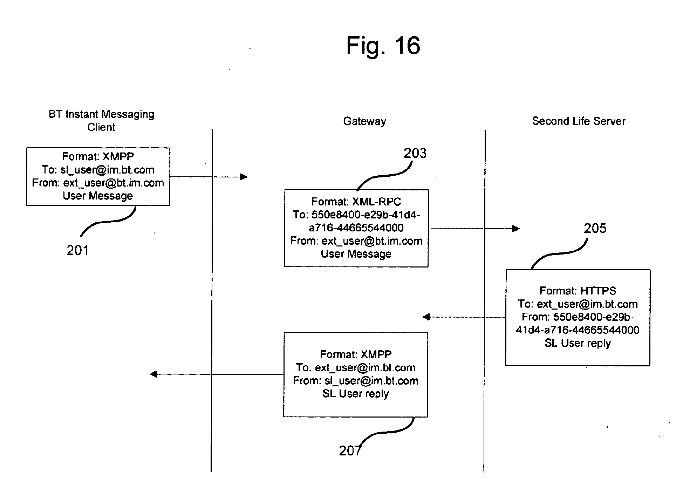

The operation of the fifth embodiment will now be described with reference to Figure 16 in a case where a BT Instant Messenger external user having a username of ext_user@im.bt.com wishes to send a message to the Second Life user having the HUD object 11 with a BT Instant Messenger username of sl_user@im.bt.com.

The external user ext_user@im.bt.com sees that the Second Life user sl_user@im.bt.com is online and therefore selects the sl_user@im.bt.com entry in the contact list and types a message in the conversation window. The BT Instant Messenger client 9 sends this data in a BT Instant Messenger XMPP format message 201 having the recipient address sl_user@im.bt.com, the external user's sender address ext_user@im.bt.com and the message body containing the external user's message.

The BT Instant Messenger server 7 routes the message 201 to the gateway 80 and the message is received at the BT Instant Messenger XMPP client interface 83. The message processor 87 indexes the data store 170 with the recipient address contained in the message and determines the corresponding UUID of the HUD object 11. The message processor generates an XML-RPC message 203 containing the UUID of the HUD object, the sender BT Instant Messenger username ext_user@im.bt.com and the message body.

The HUD object 11 receives the XML-RPC message 203 and displays the contents of the message body to the Second Life user in a message box associated with the HUD object 11.

If the Second Life user wishes to send a reply message 205 to the external user, the HUD object 11 takes the users entered text and generates an HTTPS message 205 having the UUID of the HUD object, the external user's BT Instant Messenger username extracted from the previously received XML-RPC message, and the Second Life user's entered text.

When the gateway 80 receives the HTTPS message 205 at the HTTP/HTTPS interface 85, the message processor 87 determines the Second Life user's BT Instant Messenger username from the received UUID and generates a BT Instant Messenger XMPP message 207 addressed to the external user by extracting the external user's BT instant Messenger username ext_user@im.bt.com from the received HTTPS request. The message processor also includes the Second Life user's BT Instant Messenger username of sl_user@im.bt.com and the Second Life user's message in the message body. The XMPP message is sent to the BT Instant Messenger server 7 which forwards the message to the intended BT Instant Messenger recipient.

In the fifth embodiment, a user within Second Life can communicate with BT Instant Messenger users from within the Second Life environment. The Second Life user interacts with using a Head Up Display HUD object which allows them to view their contact list, initiate conversations with BT Instant Messenger users and also reply to externally initiated conversations.

A system according to the fifth embodiment may have particular relevance to commercial establishments having a Second Life presence. For example, instead of having customer support staff active within the Second Life environment, the shop may have a notice board informing Second Life users to contact a customer support BT Instant Messenger username for assistance. The user updates their contact list from within Second Life, or using the actual BT Instant Messenger client, then activates their headset and holds a conversation with the customer support staff. The advantage of such a system for the commercial establishment is that their staff can provide support without being on Second Life which may damage workforce productivity.

### Sixth embodiment

In the first to fourth embodiments, a system architecture was described which allowed a Second Life user to control the behaviour and properties of their objects running within the persistent Second Life environment without using a Second Life client 9.

In the fifth embodiment, the Second Life user uses a HUD object linked to their BT Instant Messenger account to communicate with non-Second Life external users of the BT Instant Messenger service. In this way the Second Life user can communicate with users without leaving the Second Life environment. In particular, the user can send messages from within Second Life to a BT Instant Messenger username via a gateway.

It will be appreciated that where the user has a HUD object, and also other objects having BT Instant Messenger accounts registered with the gateway, the user has the ability to control their objects from within Second Life.

In this case the message flow would be from the HUD object within Second Life to the gateway, from the gateway to the BT Instant Messenger server, from the BT Instant Messenger Server to the gateway, and finally from the gateway to another of the user's objects.

The sixth embodiment provides the user with a convenient way to control their objects. For example, the user can avoid the need to move their avatar into the vicinity of the desired object within Second Life. This may be useful where the Second Live user cannot leave a location in the Second Life environment.

Another reason for sending communications from the HUD object to the object via the gateway and BT Instant Messaging service is in a case where the user requires the Gateway to carry out processing on the message body prior to delivery at the object. For example the processing carried out by the scripting engine as described in the third embodiment and/or the natural language processing of the parsing engine described in the fourth embodiment.

### Alternatives and Modifications

In the above embodiments, the gateway is configured to provide communication between the Second Life virtual environment and the BT Instant Messenger IM service. It will be clear to the person skilled in the art that the gateway can be modified to support other virtual environments such as Habbo Hotel®, There® and Active Worlds®.

It will also be clear to the person skilled in the art that whilst the embodiments were described with reference to the BT Instant Messenger messaging service, the gateway can be modified to support any other messaging services such as Google Talk^{™} or AOL Instant Messenger ^{™}.

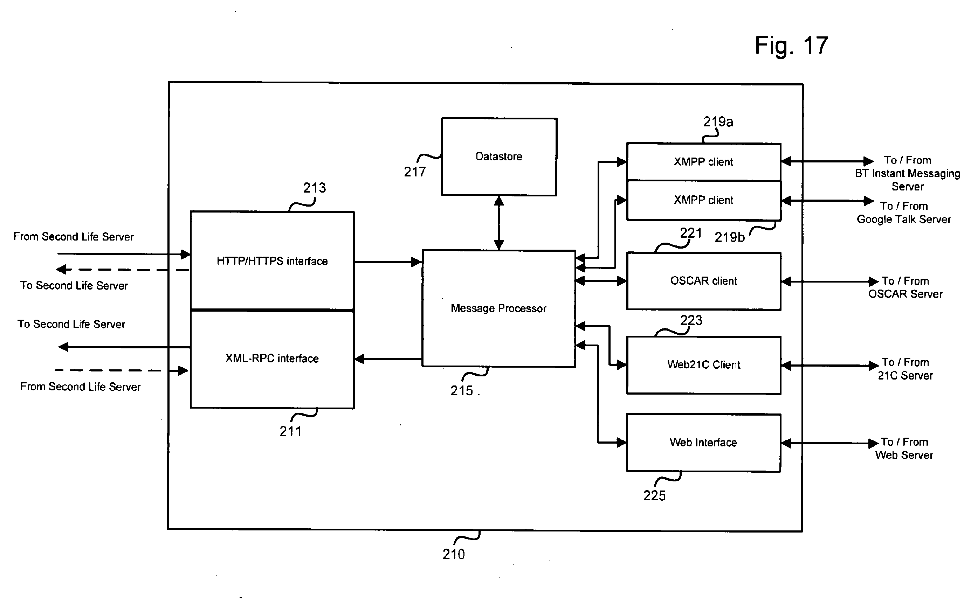

In the embodiments, the gateway includes a BT Instant Messenger XMPP client to allow communication between Second Life and the BT Instant Messenger service. the skilled person will appreciate that other messaging services can also be supported. The gateway supports a flexible plug-in architecture and can therefore support a plurality of messaging services. The only criteria being that the plug-in allows the gateway to behave as a normal client on the messaging service and that the plug-in provides a standard interface in order to communicate with the message processor on the gateway. Figure 17 illustrates a gateway having a number of message plug-ins. The data store stores log-in information for each service.

The plug-in architecture described allows services other than the described Instant Messaging services to interface with the Second Life server. In one alternative, the plug in allows communication with mobile telephone devices using the Short Messaging Service (SMS) protocol.

In a further modification, the gateway provides a plug-in to a Next-Generation-Network such as BT's 21C network. The Second Life user can initiate telephone conversations with external users. In particular, the user can create telephone object which is used to initiate calls. The user activates the telephone object which prompts the user for a telephone physically near the user, and a telephone number of the recipient. Once the user has entered these details, the telephone object creates an HTTPS message to the gateway having the source and destination telephone numbers. The gateway receives these numbers and generates a message in accordance with the 21C protocol. The 21C network dials the source telephone number and once the Second Life user has picked up the physical phone, 21C dials the recipient number before connecting the two calls together. After this call set up, the gateway has no further involvement in the communication link.

In addition to standard telephone calls, the 21C plug in supports a message format containing more than one destination telephone number to provide conference call functionality managed within Second Life.

In a further modification, Second Life users can register their own telephone number with the gateway at the same time as registering their messaging service log in information. Each Second Life user registered with the gateway can therefore use the gateway to initiate telephone calls without entering the actual number but instead just clicking the user's name in the contact list. In this way, user's can communicate with each other without knowing the recipient's actual number.

Similarly, telephone objects can have pre designated telephone numbers which are form destination telephone numbers of public services of shops in real life. e.g. a pizza store.

In the embodiments, registration information for each object is achieved by logging into the gateway, in an alternative, the UUID and IM login information is directly hardcoded into scripts associated with the object, and the object is configured to send an HTTPS message to the gateway when initialised.

## Claims

1. Apparatus for enabling communication between an object in a virtual environment and a messaging client, in which the virtual environment passes messages defined according to a first protocol, and the messaging client passes messages defined according to a second protocol, the apparatus comprising:
messaging means for:
1) receiving messages from a messaging server coupled to the messaging client, said messages having a destination address, a message body, and being defined in accordance with said second protocol, and
2) sending messages to said messaging server, said messages having a destination address, a message body and being defined in accordance with said second protocol;
virtual environment messaging means for:
1) receiving messages from a virtual environment server associated with the object, said messages having an object identifier, a message body and being defined in accordance with said first protocol and
2) sending messages to said virtual environment server, said messages having an object identifier, a message body and being defined in accordance with said first protocol; and
message processing means for converting messages between said first and second protocols.

2. Apparatus according to claim 1, further comprising a data store for storing a virtual environment identifier associated with the object, and a messaging client identifier associated with an owner of the object;
wherein the message processing means is operable to index into the data store with a destination address received by said messaging means to retrieve a corresponding virtual environment identifier; and
to generate a message for sending by said virtual messaging means, said message including the retrieved virtual environment identifier.

3. Apparatus according to claim 2 wherein said message processing means is further operable to index into the data store with a virtual environment identifier received by said messaging means to retrieve a corresponding destination address; and
to generate a message for sending by said messaging means, said message including the retrieved destination address.

4. Apparatus according to claims 2 or 3, wherein the data store is arranged to store user authentication information for registering with said messaging server and said messaging means is operable to function as a messaging client of said messaging server.

5. Apparatus according to claims 2 to 4, further comprising authentication interfacing means for allowing a user to input user authentication information for storage into said data store.

6. Apparatus according to any preceding claim, further comprising message body parsing means for analysing the message body of messages received by said first messaging means.

7. Apparatus according to any preceding claim, further comprising message body conversion means for generating different message body content.

8. Apparatus according to any preceding claim, wherein the first messaging means comprises at least one of an XMPP client interface, an OSCAR interface, an Next Generation Network interface, an SMS gateway interface, an Internet browser interface.

9. Apparatus according to any preceding claim, wherein the virtual messaging means comprises at least one of an HTTP interface, an HTTPS interface and an XML-RPC interface.

10. Apparatus according to any preceding claim, wherein the virtual environment server is a Second Life® server and the first protocol is a protocol compatible with Second Life.

11. A method of enabling communication between an object in a virtual environment and a messaging client, in which the virtual environment passes messages defined according to a first protocol, and the messaging client passes messages defined according to a second protocol, the method comprising the steps of:
receiving messages from a messaging server coupled to the messaging client, said messages having a destination address, a message body, and being defined in accordance with said second protocol;
converting messages from said second protocol into said first protocol; and
sending messages to said virtual environment server, said messages having an object identifier, a message body and being defined in accordance with said first protocol
or
receiving messages from a virtual environment server associated with the object, said messages having an object identifier, a message body and being defined in accordance with said first protocol;
converting a message from said first protocol into said second protocol; and
sending messages to said messaging server, said messages having a destination address, a message body and being defined in accordance with said second protocol.

12. A method according to claim 11, further comprising
storing in a data store, a virtual environment identifier associated with the object, and a messaging client identifier associated with an owner of the object;
indexing into the data store with a destination address received in a message to retrieve a corresponding virtual environment identifier; and
generating a message including the retrieved virtual environment identifier, or
indexing into the data store with a virtual environment identifier received in a message to retrieve a corresponding destination address; and
generating a message including the retrieved destination address.

13. A method according to claims 11 or 12, further comprising the step of storing user authentication information for logging into a messaging server.

14. A method according to claims 11 to 13 further comprising receiving user authentication information into said data store.

15. A method according to any of claims 11 to 14, further comprising the step of analysing the message body of messages.

16. A method according to any of claims 11 to 15, further comprising mapping received message body content into different message body content.
